# EUROPÄISCHE PATENTSCHRIFT

(11) **EP 0 616 857 B1**
(45) Veröffentlichungstag und Bekanntmachung des Hinweises auf die Patenterteilung: **29.12.1999**
(21) Anmeldenummer: 94103655.0
(22) Anmeldetag: 10.03.1994
(51) Int. Cl.: B07C 3/06

(54) **Verfahren und Vorrichtung zum Verteilen von Gegenständen, insbesondere flächenartig ausgebildeten**
Method and device for distributing objects, particularly having a flat shape
Procédé et dispositif de distribution d'objets, en particulier de forme plate

(30) Priorität: 20.03.1993 DE 4309043
(43) Veröffentlichungstag der Anmeldung: 28.09.1994
(73) Patentinhaber: Richard Ryll GmbH & Co. KG, 49712 Gescher (DE)
(72) Erfinder: Ryll, Christoph, D-48653 Coesfeld (DE)
(74) Vertreter: Hoffmeister, Helmut, Dr. Dipl.-Phys.

(56) Entgegenhaltungen:
- FR-A- 2 645 774
- US-A- 4 267 917

## Beschreibung

Die Erfindung betrifft eine Vorrichtung zum sortieren von Gegenständen, insbesondere flächenartig ausgebildeten, wie Zeitschriften, Kompakt-Discs oder dergleichen, mit
- einer Fördereinrichtung, die Lücken aufweist und auf der Gegenstände auflegbar sind,
- Sortiereinrichtungen, die unterhalb der Lücken angeordnet sind, und
- einer Steuereinrichtung, die anhand von Erkennungsbildern eine Verteilung der Gegenstände zu einer der Sortiereinrichtungen veranlaßt.

Eine derartige Vorrichtung ist aus der FR-A-2 645 774 bekannt.

Aus der DE 39 20 417 A1 ist ebenfalls eine Sortiereinheit für flächige Zuschnitte bekannt. Sie besteht aus drei hintereinander laufenden Förderbahnen. Zwischen der ersten und der zweiten und der zweiten und der dritten Förderbahn ist jeweils eine Sortierweiche angeordnet. Die Sortierweichen weisen Weichenkörper in Form eines spitzwinkligen Keilprofils auf, die entgegen der Förderrichtung liegen. Zeigt die Keilrichtung zur benachbarten Förderbahn, laufen die Gegenstände über diese auf die nächste. Hebt sich dagegen die Keilspitze, fallen die Gegenstände auf eine darunterlaufende Transportbahn.

Nachteilig ist, daß die Sortiereinrichtung aus einer Vielzahl von einzelnen umlaufenden Förderbahnen besteht. Die dazwischenliegenden Sortierweichen können ihre Funktion nur ausüben, wenn die Förderbahn wesentlich länger als die Länge der zu sortierenden Gegenstände ist. Dadurch wird die Anlage sehr lang und aufwendig und ein einfaches und lagerechtes verteilen der Gegenstände wird nicht ermöglicht.

Weiterhin ist aus der DE 36 04 562 A1 eine Sortiervorrichtung bekannt, die aus einem Hauptförderer und mehreren Sortierförderen besteht. An der Stelle, an der die Sortierförderer von dem Hauptförderer abgehen, ist jeweils eine Welche angeordnet, die aus nebeneinander angeordneten Rollen besteht, die schwenk- und aus- und einfahrbar sind und angetrieben werden.

Um allerdings Gegenstände verteilen bzw. sortieren zu können, muß die Weiche betätigt werden, damit die Gegenstände entweder geradeaus oder auf gleicher Ebene nach links oder rechts herausgelenkt werden können.

In der US 47 92 034 ist eine Sortiereinrichtung angegeben, die aus einem Hauptförderer und Sortierförderern besteht, bei denen Weichenrollen an einer Klappweiche zum Sortierförderer angeordnet sind.

Um allerdings einen Gegenstand vom Hauptförderer zum Sortierförderer zu lenken, muß die Klappweiche und mit ihr die Rolle verstellt werden, wozu viel Zeit- und Kraftaufwand notwendig ist, so daß ein solches System träge und nur für schwere Gegenstände geeignet ist.

Aus der DE 37 17 736 ist ein Transportsystem bekannt, das aus einer Deckbahnstrecke mit Transportriemen besteht, die Über Transportrollen geführt werden. Zwischen den Transportriemen sind Weichen angeordnet, die von einem Codierer angesteuert werden.

Um Gegenstände sortieren zu können, sind auch hier mehrere Transportbänder und separate Weichen notwendig. Auch ist ein solches System, das für das Sortieren von Briefen ausgelegt ist, nicht für ein Sortieren von Zeitschriften geeignet. Da die einzelnen Zeitschriften stehend in das Transportsystem eingelegt werden müssen, kann es beim Ausschleusen aus den Weichen zu einem Öffnen kommen, so daß sie ihre Lage ändert und sie nicht einwandfrei abgelegt werden können.

Zeitschriften, die nach dem Überschreiten ihres Erscheinungstages nicht verkauft werden konnten, sind zur Rückverrechnung wieder an den jeweiligen Verlag zurückzusenden. Notwendig ist es dabei, diese Zeitschriften nach Titel und Verlag zu ordnen. Hierbei ist es bekannt, die Zeitschriften hintereinanderliegend auf einem Band zu transportieren. Neben dem Band sind Schubeinrichtungen mit zugehörigen Bahnhöfen angeordnet. Wird eine der Zeitschriften als für einen der Bahnhöfe zuordnenbar erkannt, fährt die Schubeinrichtung über das Band hinweg und drückt die Zeitschrift herunter. Nachteilig ist dabei, daß beim seitlichen Herunterdrücken der Zeitschrift durch das Weiterlaufen des Bandes es zu einem Verkanten bzw. Verschieben der Zeitschrift kommen kann. Das Abpacken in lagegerecht und geordneten Bündeln ist dadurch nur mit hohem Aufwand möglich. Darüber hinaus kann es zu Beschädigungen des laufenden Bands oder zu einem Hinwegschieben über das Band durch die Schubeinrichtung kommen, was zu weiteren zusätzlichen Aufwendungen führt.

Der Erfindung liegt die Aufgabe zugrunde, die vorstehend genannten Nachteile beim Verteilen von Gegenständen, insbesondere flächenartig ausgebildeten, zu beseitigen und eine Vorrichtung zum Sortieren von Gegenständen, insbesondere flächenartig ausgebildeten, wie Zeitschriften, Kompakt-Discs oder dergleichen zu schaffen, die ein einfaches und lagegerechtes Verteilen der Gegenstände unter Vermeidung zusätzlicher Aufwendungen ermöglicht.

Erfindungsgemäß wird die Aufgabe durch die Merkmale des Kennzeichens von Anspruch 1 gelöst.

Die mit der Erfindung erzielten Vorteile bestehen insbesondere darin, daß mit einer Fläche-Lücke-Verteilung die Zeitschriften aus dem Obertrum sofort auf die Nebenfördereinrichtung fallen. Das nach rückwärts Abrollen der Zeitschriften in eine als Fensterabschnitt ausgebildete Lücke sorgt dafür, daß die Gegenstände fast waagerecht in die Lücke auf die im Zwischendrum darunterliegenden Sortiereinrichtungen abgelegt werden. Bei dieser Art des Aussortierens kommt es zu keinem Verkanten und Verschieben der Gegenstände. Damit eignet sich dieses Fläche-Lücke-Verfahren für das Sortieren nicht nur von flächenartigen Gegenständen, wie Zeitschriften, Kompakt-Discs oder dergleichen, sondern auch für das Sortieren von abgepackten oder in Dosen eingefüllten Lebensmitteln, wie Wurstpackungen, Gemüse- und Obstkonserven und dergleichen. Auch zerbrechliche Gegenstände, wie Gläser usw. können mit diesem sehr schonenden Sortierungsverfahren verteilt werden.

Vorteilhaft bewegt sich dabei der Rollenförderer mit einer im wesentlichen gleichmäßigen Geschwindigkeit. Durch diese gleichmäßige Geschwindigkeit wird vor allem das Bestücken des Rollenförderers mit Gegenständen wesentlich erleichtert. Möglich ist es natürlich auch, daß sich der Rollenförderer schrittweise oder mit unterschiedlichen Zwischenbeschleunigungen bewegt. Gegenstände werden dabei entgegen der Förderrichtung des Rollenförderers von den Rollenabschnitten abgerollt. Hierdurch kommt es im Gegensatz zu einem einfachen Abschieben zu einer zusätzlichen Abräumbewegung. Damit ist es möglich, die Gegenstände, insbesondere Zeitschriften, sehr schnell und vor allem lagegerecht durch die Fensterabschnitte sofort auf die darunterliegenden Sortiereinrichtungen zu legen.

Von Vorteil ist es, wenn die Gegenstände ablegegerecht, z. B. mit einer Beschriftung lesegerecht nach oben, auf die Rollenabschnitte gelegt werden. Das ist in einfachster Art und Weise dadurch möglich, daß vorher eine Erkennung durchgeführt wird und der Gegenstand in die für die spätere Verpackung notwendige Lage gebracht wird. Beim Abpacken entstehen so gleichmäßig ausgebildete Verpackungseinheiten. Das ist insbesondere immer dann von Vorteil, wenn eine spätere Wiederverwendung beabsichtigt ist. Sollen z. B. bestimmte Kompakt-Discs an anderer Stelle wiederverkauft werden, kommt es so zu einer Verpackung, die einer Originalverpackung entspricht.

Vorteilhaft ist es, wenn die die Rollenabschnitte aus gruppenweise angeordneten Rollen bestehen. Hierdurch ist es möglich, die Rollenabschnitt der jeweiligen Größe der zu sortierenden Gegenstände anzupassen. Sind z. B. nur Dosen zu vereinzeln, sind weniger Rollen notwendig, als wenn es sich um ein Verteilen von Zeitschriften der Größe DIN A 4 handelt. Die gruppenweise angeordneten Rollen werden dabei nebeneinander unter Freilassung der Fensterabschnitte im umlaufenden Rollenförderer in Ketten, Seilen oder dergleichen beidseitig gehalten und in im wesentlichen parallel zueinanderliegenden oben und unten liegenden Führungsschienenpaaren geführt. Dadurch ist gewährleistet, daß die einzelnen Rollen der Rollenabschnitte parallel zueinander in Transportrichtung bewegbar sind.

Vorteilhaft bestehen die Rollen aus einer fest mit den Ketten, Seilen oder dergleichen verbundenen starren Achse und wenigstens einem darum frei und drehbar beweglichen Hohlzylinder. Die Rollen können den jeweiligen Einsatzbedingungen entsprechend unterschiedlich ausgebildet werden. Möglich ist es, einzelne nebeneinander liegende Teilzylinderkörper auf einer Achse anzuordnen. Möglich ist es natürlich auch, einen durchgehenden Hohlzylinder über die Achse zu schieben, der sich Ober mehrere Kugellager um die starre Achse drehen kann. Hierdurch ist gewährleistet, daß bei einem Transport der Gegenstände auf den Rollenabschnitten diese unbeweglich auf diesen liegenbleiben und erst bei Betätigung durch die Abrolleinrichtungen heruntergenommen werden können.

Die Abrolleinrichtungen bestehen dabei aus einem Stab von etwa einer Länge des Fensterabschnitts. Zu sichern ist auf jeden Fall, daß die einzelnen Rollen so bewegt werden, daß der Gegenstand in seiner flächenartigen Ausbildung sicher vom jeweiligen Rollenabschnitt in den Fensterabschnitt abrollen kann.

Die Abrolleinrichtungen sind dabei in vorteilhafter Weise an wenigstens einer der Außenseitenbereiche der Transporteinrichtung angeordnet. Die Abrolleinrichtungen können dabei über, unter oder neben den Rollen des jeweiligen Rollenabschnitts angeordnet sein, so daß bei einem Ansteuerimpuls eine Berührung mit den einzelnen Rollen des Rollenabschnitts sichergestellt ist. Möglich ist es natürlich auch, die Abrolleinrichtungen jeweils an beiden Außenseiten des Rollenförderers, oder auch von unten her in der Mitte zu positionieren.

Vorteilhaft bestehen die Sortiereinrichtungen aus einem Förderband und wenigstens einer an einem der Enden des Förderbands angeordneten Aufnahmeeinrichtungen. Selbstverständlich ist es auch möglich, daß die Aufnahmeeinrichtungen zu beiden Seiten des jeweiligen Förderbands angeordnet sind. Hierdurch ist es möglich, die zu sortierenden Gegenstände lage- und formgerecht aufzunehmen, damit sie nach dem Abstapeln entsprechend lagegerecht abgepackt werden können.

In diesem Zusammenhang hat es sich als günstig erwiesen, die Förderbänder in einem Winkel zwischen 10 - 170° versetzt zur Laufrichtung des umlaufenden Rollenförderersunterhalb des oberen Führungsschienenpaares anzuordnen. Die ankommenden Gegenstände können so in verschiedene Richtungen schnell und sicher verteilt werden. Ein direktes Anordnen unter den Fensterabschnitten sichert ein schnelles und lagegerechtes Ablegen auf dem entsprechenden Transportband, so daß es in keiner Weise zu einem Verkanten oder Verschieben des Gegenstandes kommen kann.

Vorteilhaft ist es dabei, die Förderbänder abgewinkelt zur Waagerechten an dem oberen Führungsschienenpaar abzuhängen. Das Abwinkeln der Förderbänder kann dabei wechselseitig vom jeweiligen Förderbandmotor oder einem anderen Bezugspunkt erfolgen. Das Abhängen wird dabei durch Ketten, Flachbänder oder durchgehende Wandungen vorgenommen. Zur abgewinkelten Seite hin ist wenigstens im Bereich der Fensterabschnitte jedes Förderbans mit einer Anschlagleiste oder dergleichen versehen. Diese Anschlagseite sichert, daß die aus dem Fensterabschnitt kommenden Gegenstände einseitig bereits vorsortiert werden und nur noch in der jeweiligen Aufnähmeeinrichtung über- oder nebeneinander zu stapeln sind. Hierdurch werden vor allem Stapel bzw. Collies so ordentlich gepackt, daß sie danach nur noch entsprechend z. B. mit einer Kunststoffhülle umgeben werden brauchen.

Die Erfindung wird nachstehend anhand eines Ausführungsbeispiels näher erläutert. Es zeigen:
- Figur 1: eine Anlage zum Sortieren von Gegenständen, insbesondere Zeitschriften, in einer schematischen Seitenansicht,
- Figur 2: eine Sortieranlage gemäß Figur 1 in einer schematischen Draufsicht.

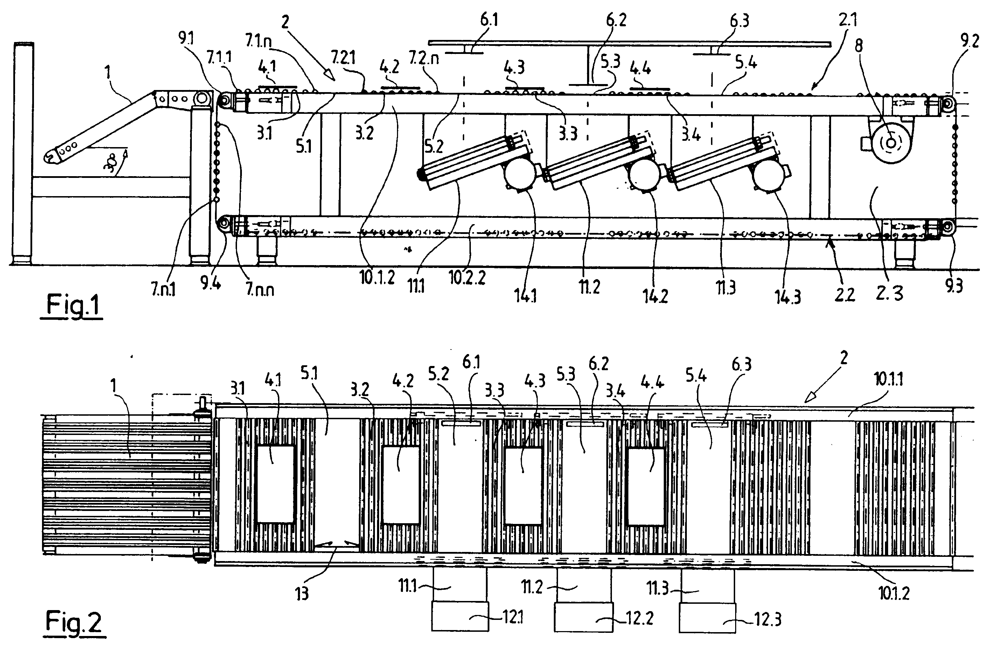

Eine Sortieranlage besteht gemäß Figur 1 und 2 aus einer Aufgabeeinrichtung 1 und einem umlaufenden Rollenförderer 2. Erfindungswesentlich ist dabei, daß der Rollenförderer 2 untergliedert ist in Rollenabschnitte 3.1, 3.2, 3.3, 3.4, ..., zwischen denen Fensterabschnitte 5.1, 5.2, 5.3, 5.4, ..., liegen. Der Rollenabschnitt 3.1 besteht aus einzelnen Rollen 7.1.1, ... 7.1.n, der Rollenabschnitt 3.2 aus einzelnen Rollen 7.2.1, ... 7.2.n und der letzte Rollenabschnitt aus Rollen 7.n.1 ... 7.n.n. Die Anzahl der Rollen 7.1.1, ... 7.n.n in den einzelnen Rollenabschnitten 3.1, ... ist der jeweiligen Größe der zu vereinzelnden Gegenstände 4.1, ... anzupassen. Die einzelnen Rollen 7.1, ... 7.n bestehen aus einer durchgehenden Achse, um die drehbar gelagert ein Hohlzylinder angeordnet ist. Möglich ist es natürlich auch, einzelne nebeneinanderliegende Rollen auf der Achse drehbar anzuordnen. Die Achsen sind zu beiden Seiten an nicht dargestellten Ketten oder Seilen befestigt und laufen Ober Umlenkrollen 9.1, 9.2, 9.3 und 9.4 am Anfang und am Ende des Rollenförderers im Oberdrum 2.1 in oberen und im Unterdrum 2.2 in unteren Führungsschienen 10.1.1, 10.1.2 des Gerüsts für den Rollenförderer 2. Mit dem Befestigen der einzelnen Rollen 7.1.1., ... 7.n.n an den Ketten oder Seilen entstehen die Rollenabschnitte 3.1, ... und durch ein Nichtbefestigen die Fensterabschnitte 5.1, ... mit einer entsprechenden Länge 13. Diese Länge 13 wird so gewählt, daß der Gegenstand z. B. in Form einer Zeitung durch den jeweiligen Fensterabschnitt 5.1 hindurchpaßt. Über dem Rollenförderer 2 sind Abrolleinrichtungen 6.1, 6.2 und 6.3 angeordnet. Selbstverständlich ist es auch möglich, diese Abrolleinrichtungen neben, unterhalb und/oder zu beiden Seiten des Rollenförderers 2 anzubringen.

Wesentlich ist darüber hinaus, daß zwischen Ober- und dem Unterdrum 2.1, 2.2 Förderbänder 11.1, 11.2 und 11.3 in einem Zwischendrum 2.3 eingeschoben sind. Sie sind unterhalb der Fensterabschnitte 5.1, 5.3 und 5.4 vom oberen Führungsschienenpaar 10.1.1 und 10.1.2 abgehängt. Diese Förderbänder 11.1, ... sind abgewinkelt angeordnet. Sie werden durch Förderbandmotoren 14.1, 14.2 und 14.3 angetrieben. An einem ihrer Enden sind Aufnahmeeinrichtungen 12.1, 12.2 und 12.3 angeordnet. Selbstverständlich ist es auch möglich, diese Aufnahmeeinrichtungen zu beiden Seiten der Förderbänder zu positionieren. Die Förderbänder können dabei in einem Winkel zwischen 10 - 170° angeordnet werden. Wie insbesondere aus der Figur 2 hervorgeht, sind sie vorzugsweise im rechten Winkel angeordnet.

Für ein Sortieren und Verteilen von Zeitungen 4.1, ... werden die Rollenabschnitte 3.1, ... in entsprechender Breite und die Fensterabschnitte 5.1, ... in der Länge 13 gebildet. Dabei ist es vorteilhaft, wenn die Breite der Rollenabschnitte 3.1, ... größer als jeder der Fensterabschnitte ist. Danach wird der Rollenförderer 2 gespannt, die Förderbänder 11.1, ... so abgewinkelt, daß sie mit der entsprechenden Aufnahmeeinrichtung 12.1, ... zusammenarbeiten können. Durch die Inbetriebnahme des Motors 8 bewegt sich der umlaufende Rollenförderer 2. Auf die Aufnahmeeinrichtung 1, die über ein Gelenk entsprechend abgewinkelt werden kann, werden Zeitschriften 4.1, ... aufgelegt. Dieses Auflegen wird so vorgenommen, daß die Zeitschriften alle gleichmäßig, z. B. mit dem Titel nach oben auf die Rollenabschnitte 3.1, ... abgelegt werden. Unmittelbar über dem Rollenabschnitt 3.1 kann z. B. eine Erkennungseinrichtung für die jeweilige Zeitschrift angeordnet werden. Das jeweilige Erkennungsbild wird an eine Steuereinrichtung gegeben. Erreicht z. B. die Zeitschrift 4.3 die Abrolleinrichtung 6.2, wird diese betätigt. Dabei bewegt sich die Abrolleinrichtung 6.2 nach unten und berührt die Rollen des Rollenabschnitts 3.3. Dadurch, daß die äußeren Zylinder, auf denen bis dahin die Zeitschrift 4.3 unbeweglich lag, auf der inwendigen Achse drehbar gelagert sind, bewegen sich die Rollen des Rollenabschnitts 3.3 entgegen der Beförderrichtung des Rollenförderers 2. Hierdurch wird die Zeitschrift 4.3 zurückgerollt und fällt so in den dahinterliegenden Fensterabschnitt 5.2. Durch die rollende Rückwärtsbewegung der Zeitschrift 4.3 wird diese lagegerecht auf das darunter befindliche Förderband 11.2 gelegt. Wesentlich ist dabei, daß die Länge und die Position der Abrolleinrichtung zum Fensterabschnitt 5.2 so gewählt werden, daß die Zeitschrift 4.3 durch den Fensterabschnitt 5.2 auf das darunter schräg liegende Förderband 11.2 fallen kann. Dadurch, daß die Förderbänder 11.1, ... zumindest im Bereich der Fensterabschnitte 5.2, ... durch einseitige Leisten, durchgängige Wände oder dergleichen begrenzt sind, lehnt sich die Zeitschrift 4.3 an diese einseitige Begrenzung an. Hierdurch wird gewährleistet, daß die Zeitschrift 4.3 bereits beim Ablegen auf das Förderband 11.1 so positioniert wird, daß darauf folgende Zeitschriften nur noch übereinander gestapelt in die Aufnahmeeinrichtung 12.2 bei Betätigung des Förderbandmotors übereinander abgelegt werden.

Befinden sich Aufnahmeeinrichtungen zu beiden Seiten des Förderbands 11.2, ist es möglich, über den gleichen Fensterabschnitt 5.2 mit der gleichen Abrolleinrichtung 6.2 unterschiedliche Zeitschriften durch eine unterschiedliche Förderrichtung des Förderbands 11.2 abzulegen. Handelt es sich bei den Zeitschriften 4.1, ... um unterschiedliche Zeitschriften, können selbstverständlich nach deren Erkennung durch die gleichzeitige Betätigung von Abrolleinrichtungen 6.1, ... mehrere Zeitschriften gleichzeitig auf die unter den Fensterabschnitten 5.1, ... befindlichen Förderbänder 11.1, ... abgelegt und entsprechend in die Aufnahmeeinrichtungen 12.1, ... transportiert werden. Damit ist die erfindungsgemäße Sortieranlage in der Lage, mit hoher Geschwindigkeit eine Vielzahl unterschiedlichster Zeitschriften geordnet und lagegerecht zu sortieren.

## Patentansprüche

1. Vorrichtung zum Verteilen von Gegenständen, insbesondere flächenartig ausgebildeten, wie Zeitschriften, Kompakt-Discs oder dergleichen, mit
- einer Fördereinrichtung (2) , die Lücken (5.1, ...) aufweist und auf der Gegenstände (4.1, ...) aufzulegen sind,
- Sortiereinrichtungen (11.1, ..., 12.1, ...), die unterhalb der Lücken (5.1, ...) angeordnet sind, und
- einer Steuereinrichtung, die anhand von Erkennungsbildern eine Verteilung der Gegenstände (4.1, ...) zu einer der Sortiereinrichtungen (11.1, ..., 12.1, ...) veranlaßt,
dadurch gekennzeichnet,
- daß die Fördereinrichtung ein mit einem endlosen Zugmittel umlaufender Rollenförderer (2) ist, der in Rollenabschnitte (3.1, ...) aus gruppenweise angeordneten Rollen (7.1.1, ..., 7.1.n, ... 7.n.1, ... 7.n.n) mit dazwischenliegenden, als Fensterabschnitte (5.1, ...) ausgebildeten, Lücken untergliedert ist, und
- daß den Sotiereinrichtungen (11.1, ..., 12.1, ...) Abrolleinrichtungen (6.1, ...) zugeordnet sind, die von der Steuereinrichtung angesteuert die Rollen (7.1.1, ..., 7.1.n, ... 7.n.1, ... 7.n.n) einer der Rollenabschnitte (3.1, ...) berühren, so daß der daraufliegende Gegenstand (4.1, ...) entgegen der Förderrichtung des Rollenförderers (2) abrollt und durch den dahinterliegenden angewählten Fensterabschnitt (5.1, ...) auf die unter diesem Fensterabschnitt (5.1, ...) liegende Sortiereinrichtung (11.1, ... 12.1, ...) fällt.

2. Vorrichtung nach Anspruch 1, dadurch gekennzeichnet, daß der Rollenförderer (2) eine im wesentlichen gleichmäßige Umlaufgeschwindigkeit hat.

3. Vorrichtung nach Anspruch 1 oder 2, dadurch gekennzeichnet, daß die Gegenstände (4.1, ...) auf die Rollenabschnitte (3.1, ... ) gelegt sind.

4. Vorrichtung nach einem der Ansprüche 1 bis 3 , dadurch gekennzeichnet, daß im umlaufenden Rollenförderer (2) die gruppenweise angeordneten Rollen (7.1.1, ... 7.1.n, 7.2.1, ... 7.2.n, ... 7.n.1, ... 7.n.n) nebeneinander unter Freilassung der Fensterabschnitte (5.1, ... ) in Ketten, Seilen oder dergleichen beidseitig gehalten und in im wesentlichen parallel zueinander liegenden oberen und unteren Führungspaaren (10.1.1, 10.1.2, 10.2.1, 10.2.2) geführt sind.

5. Vorrichtung nach einem der Ansprüche 1 bis 4, dadurch gekennzeichnet, daß die Rollen (7.1.1, ... 7.n.n) aus einer fest mit den Ketten, Seilen oder dergleichen verbundenen starren Achse und wenigstens einem darum frei und drehbar beweglichen Hohlzylinder besteht.

6. Vorrichtung nach einem der Ansprüche 1 bis 5, dadurch gekennzeichnet, daß die Abrolleinrichtungen (6.1, ... ) aus einem Stab von in etwa einer Länge (13) des Fensterabschnitts (5.1, ... ) besteht.

7. Vorrichtung nach einem der Ansprüche 1 bis 6, dadurch gekennzeichnet, daß die Abrolleinrichtungen (6.1, ... ) in wenigstens einem der Außenseitenbereiche des Rollenförderers (2) angeordnet sind.

8. Vorrichtung nach einem der Ansprüche 1 bis 7, dadurch gekennzeichnet, daß die Sortiereinrichtungen aus einem Förderband (11.1, ... ) und wenigstens einer an einem der Enden des Förderbands (11.1, ... ) angeordneten Aufnahmeeinrichtung (12.1, ... ) bestehen.

9. Vorrichtung nach einem der Ansprüche 1 bis 8, dadurch gekennzeichnet, daß die Förderbänder (12.1, ... ) in einem Winkel zwischen 10 - 170° versetzt zur Laufrichtung des umlaufenden Rollenförderers (2) unterhalb des oberen Führungsschienenpaares (10.1.1, 10.1.2) angeordnet ist.

10. Vorrichtung nach einem der Ansprüche 1 bis 9, dadurch gekennzeichnet, daß die Förderbänder (12.1, ... ) abgewinkelt zur Waagerechten an dem oberen Führungsschienenpaar (10.1.1, 10.1.2) abgehängt sind.

## Claims

1. Apparatus for distributing articles, more particularly flat articles, such as magazines, compact disks or the like, comprising
- a conveyor means (2), which has gaps (5.1, ...) and on which articles (4.1, ...) are to be placed,
- sorting means (11.1, ..., 12.1, ...) which are disposed beneath the gaps (5.1, ...) and
- a control means which by reference to recognition images causes the articles (4.1, ...) to be distributed to one of the sorting means (11.1, ..., 12.1, ...),
characterised in that
- the conveyor means is a roller conveyor (2) circulating with an endless traction means and divided into roller sections (3.1, ...) consisting of rollers (7.1.1, ..., 7.1.n, ..., 7.n.1, ..., 7.n.n) disposed in groups with gaps therebetween in the form of window sections (5.1, ...), and
- in that the sorting means (11.1, ..., 12.1, ...) have associated roll-off means (6.1, ...) which, under the control of the control means, touch the rollers (7.1.1, ..., 7.1.n, ... 7.n.1, ... 7.n.n) of one of the roller sections (3.1, ...) so that the article (4.1, ...) resting thereon rolls off in opposition to the direction of conveyance of the roller conveyor (2) and drops through the selected window section (5.1, ...) therebehind on to the sorting means (11.1, ... 12.1, ...) situated beneath this window section (5.1, ...).

2. Apparatus according to claim 1, characterised in that the roller conveyor (2) has a substantially uniform speed of circulation.

3. Apparatus according to claim 1 or 2, characterised in that the articles (4.1, ...) are placed on the roller sections (3.1, ...).

4. Apparatus according to any one of claims 1 to 3, characterised in that the rollers (7.1.1, ... 7.1.n, 7.2.1, ... 7.2.n, ... 7.n.1, ... 7.n.n) disposed in groups in the circulating roller conveyor (2) are held on both sides side by side in chains, cables or the like, the window sections (5.1, ...) being left free, and are guided in substantially parallel upper and lower pairs of guides (10.1.1, 10.1.2, 10.2.1, 10.2.2).

5. Apparatus according to any one of claims 1 to 4, characterised in that the rollers (7.1.1, ... 7.n.n) consist of a rigid shaft permanently connected to the chains, cables or the like and at least one hollow cylinder movable freely and rotatable therearound.

6. Apparatus according to any one of claims 1 to 5, characterised in that the roll-off means (6.1, ...) consist of a bar of substantially the length (13) of the window section (5.1, ...).

7. Apparatus according to any one of claims 1 to 6, characterised in that the roll-off means (6.1, ...) are disposed in at least one of the outside zones of the roller conveyor (2).

8. Apparatus according to any one of claims 1 to 7, characterised in that the sorting means consist of a conveyor belt (11.1, ...) and at least one receiving means (12.1, ...) disposed on one of the ends of the conveyor belt (11.1, ...).

9. Apparatus according to any one of claims 1 to 8, characterised in that the conveyor belts (12.1, ...) are disposed at an angle of between 10 to 170° offset form the direction of movement of the circulating roller conveyor (2) beneath the upper pair of guide rails (10.1.1, 10.1.2).

10. Apparatus according to any one of claims 1 to 9, characterised in that the conveyor belts (12.1, ...) are suspended at an angle to the horizontal from the upper guide rail pair (10.1.1, 10.1.2).

## Revendications

1. Dispositif de distribution d'objets, en particulier de forme plate comme des journaux, des disques compacts ou similaires, comprenant:
- un dispositif de transport (2) qui comporte des interstices (5.1, ...) et sur lequel les objets (4.1, ...) doivent être couchés,
- des dispositifs de tri (11.1, ..., 12.1, ...) qui sont agencés au-dessous des interstices (5.1, ...), et
- un dispositif de commande qui provoque, au moyen d'images de reconnaissance, une distribution des objets (4.1, ...) vers l'un des dispositifs de tri (11.1, ..., 12.1, ...),
caractérisé en ce que
- le dispositif de transport est un transporteur (2) à rouleaux qui circule sous l'effet d'un moyen de traction sans fin et qui est divisé en parties (3.1, ...) de rouleaux formées de rouleaux (7.1.1, ..., 7.1.n, ..., 7.n.1, ..., 7.n.n) séparées par des interstices réalisés sous forme de parties (5.1, ...) de fenêtres, et en ce que
- des dispositifs d'évacuation (6.1, ...), qui viennent au contact des rouleaux (7.1.1, ..., 7.1.n, ..., 7.n.1, ..., 7.n.n) de l'une des parties (3.1, ...) de rouleaux en étant commandés par le dispositif de commande, sont associés aux dispositifs de tri (11.1, ..., 12.1, ...) d'une manière telle que l'objet qui y repose (4.1, ...) est évacué dans la direction opposée à la direction de transport du transporteur (2) à rouleaux et tombe sur le dispositif de tri (11.1 ..., 12.1, ...) sous-jacent à cette partie (5.1, ...) de fenêtre, à travers la partie sélectionnée (5.1, ...) de fenêtre disposée en arrière.

2. Dispositif selon la revendication 1, caractérisé en ce que la vitesse de circulation du transporteur (2) à rouleaux est sensiblement uniforme.

3. Dispositif selon la revendication 1 ou 2, caractérisé en ce que les objets (4.1, ...) sont couchés sur les parties (3.1, ...) de rouleaux.

4. Dispositif selon l'une quelconque des revendications 1 à 3, caractérisé en ce que les rouleaux (7.1.1, ..., 7.1.n, ..., 7.2.1, ... 7.2.n, ... 7.n.1, ..., 7.n.n) agencés par groupe sont tenus côte à côte des deux côtés dans des chaînes, des câbles ou similaires dans le transporteur (2) à rouleaux en circulation en laissant libres les parties (5.1, ...) de fenêtres, et sont guidés dans des paires de guidages supérieures et inférieures (10.1.1, 10.1.2, 10.2.1, 10.2.2) agencés sensiblement en parallèle entre eux.

5. Dispositif selon l'une quelconque des revendications 1 à 4, caractérisé en ce que les rouleaux (7.1.1, ..., 7.n.n) consistent en un axe rigide relié de façon fixe aux chaînes, câbles ou similaires et en au moins un cylindre creux mobile librement à rotation autour de cet axe.

6. Dispositif selon l'une quelconque des revendications 1 à 5, caractérisé en ce que les dispositifs d'évacuation (6.1, ...) se composent chacun d'une barre d'une longueur (13) à peu près égale à celle de la partie (5.1, ...) de fenêtre.

7. Dispositif selon l'une quelconque des revendications 1 à 6, caractérisé en ce que les dispositifs d'évacuation (6.1, ...) sont agencés dans au moins l'une des zones latérales extérieures du transporteur (2) à rouleaux.

8. Dispositif selon l'une quelconque des revendications 1 à 7, caractérisé en ce que les dispositifs de tri se composent d'une bande transporteuse (11.1, ...) et d'au moins un dispositif récepteur (12.1, ...) agencé à l'une des extrémités de la bande transporteuse (11.1, ...).

9. Dispositif selon l'une quelconque des revendications 1 à 8, caractérisé en ce que les bandes transporteuses (11.1, ...) sont agencées au-dessous de la paire supérieure (10.1.1, 10.1.2) de rails de guidage en formant un angle compris entre 10 et 170° avec la direction du déplacement du transporteur (2) à rouleaux en circulation.

10. Dispositif selon l'une quelconque des revendications 1 à 9, caractérisé en ce que les bandes transporteuses (11.1, ...) sont suspendues à la paire supérieure (10.1.1, 10.1.2) de rails de guidage en étant inclinées par rapport à l'horizontale.
